# FASCICULE DE BREVET EUROPEEN

(11) **EP 2 847 371 B1**
(45) Date de publication et mention de la délivrance du brevet: **26.08.2020**
(21) Numéro de dépôt: 13722385.5
(22) Date de dépôt: 07.05.2013
(51) Int. Cl.: D03D 15/00, D03D 27/06, B01D 53/88, B01D 53/94, C02F 1/72, C03C 25/42, D06M 11/38, B01D 53/86

(54) **TISSU A FILS RELEVES EN VERRE, EN QUARTZ OU EN MÉTAL**
GLAS, QUARZ- ODER METALLFLORSTOFF
GLASS, QUARTZ OR METAL PILE FABRIC

(30) Priorité: 10.05.2012 FR 1254299
(43) Date de publication de la demande: 18.03.2015
(73) Titulaire: LOUTI, 69380 Dommartin (FR); Tissages Des Roziers, 42810 Rozier-En-Donzy (FR)
(72) Inventeur: FAURIE, Jean-Michel, F-69380 Dommartin (FR); CHAVANON, Didier, F-38540 St Just Chaleyssin (FR); COMPIGNE, Gérard, F-42810 Rozier-en-donzy (FR); PERIAT, Emmanuel, F-42110 Cleppe (FR)
(74) Mandataire: Lavoix
(86) Numéro de dépôt international: PCT/EP2013/059539
(87) Numéro de publication internationale: WO 2013/167625

(56) Documents cités:
- EP-A1- 2 258 893
- WO-A2-2008/087339
- GB-A- 964 508
- US-A- 2 385 577
- US-A- 3 953 913

## Description

L'invention concerne le domaine des textiles techniques et en particulier le domaine des textiles utilisés comme support, notamment comme support de composés actifs ou activables. Ainsi, l'invention fournit un tissu catalytique à fils relevés réalisé en verre.

L'invention concerne également une méthode de fabrication de ce tissu.

EP-1008565 décrit l'utilisation de fibres de verre enduites d'oxyde de titane comme photocatalyseur. Les fibres de verre sont enduites par mise en œuvre d'un procédé sol-gel. Ce document décrit la décomposition de substances organiques, notamment la stérilisation ou la désodorisation, au moyen de ces fibres de verre enduites.
Selon ce document, l'augmentation de la surface efficace de dioxyde de titane est réalisée en multipliant les étapes de revêtement par du photocatalyseur ou bien en utilisant un agent tensio-actif lors de cette étape de revêtement.

EP-823280 concerne la filtration au moyen de dispositifs intégrant un photocatalyseur. Ce photocatalyseur est supporté sur un support qui peut être en verre et peut également comprendre des saillies. Des additifs peuvent être ajoutés au photocatalyseur ou bien être utilisés en sous-couche pour améliorer la photocatalyse.

US 3,953,913 décrit un matériau velours comprenant un tissu à fils relevés où au moins une partie du tissu de support et/ou des fils relevés est métallique.

WO-2008/087339 décrit une nappe textile comportant des fibres optiques et des fils de liage dont la surface peut être revêtue de particules photocatalytiques. Les fibres optiques comprennent des altérations permettant d'émettre de la lumière de manière latérale afin d'activer des particules photocatalytiques. La nappe textile décrite par ce document est tissée selon une armure de type toile. Aucune indication n'est fournie pour améliorer l'efficacité ou le rendement de la nappe textile.

D2 divulgue un tissu catalytique comprenant une trame et au moins une chaîne de fond en verre et une chaîne de fils relevés.

Ainsi, il existe un besoin de fournir des textiles de verre, de métal, ou leurs combinaisons, qui soient utilisables comme support, dans le domaine de la catalyse, et qui possèdent des performances améliorées.
L'invention propose donc un tissu à fils relevés, réalisé en verre, qui apporte une solution à tout ou partie des problèmes des supports ou tissu de verre ou de métal de l'état de la technique.
De manière avantageuse et à quantité de matière égale, le tissu selon l'invention possède une surface efficace améliorée. Les fils relevés du tissu selon l'invention permettent d'augmenter la surface de contact avec le milieu environnant.

Ainsi, l'invention fournit un tissu à fils relevés comprenant
- une trame et au moins une chaîne de fond en fils retors, en verre, en métal, ou leurs combinaisons, de taille allant de 5 à 2000 tex ;
- une chaîne de fils relevés dont la hauteur de poil est comprise entre 0,5 et 15 mm dont les fils sont des fils retors, en verre, de taille allant de 5 à 2000 tex.
De manière préférée, le tissu selon l'invention comprend une trame, une chaîne de fond et une chaîne de fils relevés.
De manière également préférée, le tissu selon l'invention comprend une trame, deux chaînes de fond et une chaîne de fils relevés.
De manière préférée, le tissu selon l'invention est un velours coupé ou un velours par chaîne ou un velours par chaîne et coupé.
Avantageusement, la hauteur de poil du tissu selon l'invention est comprise entre 1 et 10 mm ou entre 2 et 8 mm.
La densité de poils du tissu selon l'invention est comprise entre 50 et 200 poils par cm², de préférence comprise entre 80 et 160 poils par cm², en particulier entre 60 et 120 poils par cm².

Pour le tissu selon l'invention, les fils de fond utilisés peuvent être en verre, en métal, ou leurs combinaisons.
Les fils utilisés pour la fabrication du tissu selon l'invention sont préférentiellement en verre et notamment en silice, en silice purifiée ou en quartz, notamment les fils fabriqués à partir de cristaux de quartz. Des fils en cristal ou verre au plomb ou encore en verre sodique conviennent également pour la fabrication du tissu selon l'invention.
Comme exemples de fils en verre utilisés pour la fabrication d'un tissu selon l'invention, on peut citer les fils fabriqués à partir de fibres de silice très pure et qui sont continus, non-poreux, homogènes et amorphes. La pureté de la silice peut être supérieure à 90%, à 95 ou 99%, voire à 99,99%.
Les fils de fond utilisés peuvent également être en métal, de préférence en acier, en particulier en acier inoxydable.
Le tissu selon l'invention peut également être réalisé à partir de mélanges de différents fils, en particulier à partir de mélanges de différents fils de verre ou les fils de fond peuvent être de mélanges de fils de verre et de fils métalliques, en particulier de mélanges de fils de quartz et de fils d'acier inoxydable.

De manière préférée, les fils utilisés pour le tissu selon l'invention sont non-élastiques, possèdent une bonne tenue aux rayonnements UV ainsi qu'aux traitements thermiques ou aux traitements par des agents chimiques.
Ces fils peuvent avantageusement être choisis parmi les fils câblés.
De manière générale, les fils mis en œuvre peuvent avoir une taille allant de 10 à 500 tex ou de 15 à 200 tex ou de 20 à 100 tex ou de 25 à 80 tex ou de 40 à 75 tex.

L'invention concerne également la fabrication d'un tissu à fils relevés selon l'invention. Ainsi, l'invention fournit un procédé de fabrication d'un tissu comprenant
- au moins un ourdissage pour préparer au moins une chaîne de fond en fils retors, en verre, en métal, ou leurs combinaisons, de taille allant de 5 à 2000 tex ;
- un ourdissage pour préparer une chaîne de poils en verre, de taille allant de 5 à 2000 tex ;
- le tissage des chaînes de fond et de poils et de la trame ;
- la coupe des fils de la chaîne de poils et permettant d'obtenir un tissu comprenant
- une trame et au moins une chaîne de fond en fils retors, en verre, en métal, ou leurs combinaisons, de taille allant de 5 à 2000 tex ;
- une chaîne de fils relevés dont la hauteur de poil est comprise entre 0,5 et 15 mm dont les fils sont des fils retors, en verre, de taille allant de 5 à 2000 tex.

De manière préférée, le procédé selon l'invention permet donc de fabriquer un tissu comprenant une trame, une chaîne de fond et une chaîne de fils relevés. De manière également préférée, le procédé selon l'invention permet donc de fabriquer un tissu comprenant une trame, deux chaînes de fond et une chaîne de fils relevés.

Pour le procédé de fabrication selon l'invention, la tension de la chaîne de fond est, de préférence, comprise entre 5 et 30 g/fil (gramme par fil), c'est-à-dire entre environ 0,049 N/fil et 0,29 N/fil.
De manière également préférée, la tension de la chaîne de poils est comprise entre 5 et 30 g/fil, c'est-à-dire entre environ 0,049 N/fil et 0,29 N/fil.

De manière avantageuse, la vitesse de tissage du procédé selon l'invention est comprise entre 70 coups/min et 300 coups/min, de préférence entre 80 coups/min et 200 coups/min.
Pour ce qui concerne l'ourdissage, la vitesse de l'ourdissage est généralement comprise entre 10 et 80 m/min, de préférence entre 20 et 40 m/min, par exemple de 30 m/min.
Le tissu à fils relevés selon l'invention peut être fabriqué au moyen d'un dispositif de fabrication d'un tissu comprenant
- une partie pour l'ourdissage pour préparer au moins une chaîne de fond ou une chaîne de poils ;
- un moyen pour préparer la trame ;
- une partie pour le tissage des chaînes de fond et de poils et de la trame ;
- des moyens de coupe des fils de la chaîne de poils et permettant de fabriquer un tissu comprenant
- une trame et au moins une chaîne de fond en fils retors, en verre, en métal, ou leurs combinaisons, de taille allant de 5 à 2000 tex ;
- une chaîne de fils relevés dont la hauteur de poil est comprise entre 0,5 et 15 mm dont les fils sont des fils retors, en verre, de taille allant de 5 à 2000 tex.

De manière avantageuse, le moyen pour préparer la trame est une navette ou des aiguilles.

Les moyens de coupe sont, avantageusement, choisis parmi des fers dont la largeur est comprise entre 0,1 mm et 2 mm ou dont la hauteur est comprise entre 0,5 mm et 15 mm, ou parmi une lame coupante et circulaire ou des rasoirs permettant de couper une hauteur de poil comprise entre 0,5 mm et 15 mm.

De manière préférée, on peut employer un dispositif (D1) de fabrication d'un tissu selon l'invention qui comprend
- une partie pour l'ourdissage pour préparer une chaîne de fond ou une chaîne de poils ;
- un moyen pour préparer la trame ;
- une partie pour le tissage de la chaîne de fond, de la chaîne de poils et de la trame ;
- des moyens de coupe des fils de la chaîne de poils choisis parmi des fers dont la largeur est comprise entre 0,1 mm et 2 mm ou dont la hauteur est comprise entre 0,5 mm et 15 mm ; et permettant de fabriquer un tissu comprenant
- une trame et une chaîne de fond en fils retors, en verre, de taille allant de 5 à 2000 tex ;
- une chaîne de fils relevés dont la hauteur de poil est comprise entre 0,5 et 15 mm dont les fils sont des fils retors, en verre, en métal, ou leurs combinaisons, de taille allant de 5 à 2000 tex.
On peut également employer un dispositif (D2) pour la fabrication d'un tissu selon l'invention et qui comprend
- une partie pour l'ourdissage pour préparer deux chaînes de fond ou une chaîne de poils ;
- un moyen pour préparer la trame ;
- une partie pour le tissage des deux chaînes de fond, de la chaîne de poils et de la trame ;
- des moyens de coupe des fils de la chaîne de poils choisis parmi une lame coupante et circulaire ou des rasoirs permettant de couper une hauteur de poil comprise entre 0,5 mm et 15 mm ; et permettant de fabriquer un tissu comprenant
- une trame et deux chaînes de fond en fils retors, en verre, en métal, ou leurs combinaisons, de taille allant de 5 à 2000 tex ;
- une chaîne de fils relevés dont la hauteur de poil est comprise entre 0,5 et 15 mm dont les fils sont des fils retors, en verre, de taille allant de 5 à 2000 tex.
Le tissu selon l'invention peut être utilisé dans de nombreux domaines techniques. Il peut notamment être mis en œuvre en tant que support.
Les caractéristiques mécaniques et les propriétés thermiques du tissu à fils relevés selon l'invention peuvent avantageusement être mises en œuvre comme matériaux ou tissu isolant, en particulier dans les domaines du bâtiment ou de l'aéronautique.

De manière avantageuse, l'invention concerne un tissu selon l'invention comme support, en particulier comme support d'au moins un composé actif tel qu'un catalyseur ou un photocatalyseur.
Ainsi, l'invention fournit un tissu catalytique à fils relevés comprenant
- une trame et au moins une chaîne de fond en fils retors, en verre, en métal, ou leurs combinaisons, de taille allant de 5 à 2000 tex ;
- une chaîne de fils relevés dont la hauteur de poil est comprise entre 0,5 et 15 mm dont les fils sont des fils retors, en verre, de taille allant de 5 à 2000 tex ;
- au moins un catalyseur.
De manière préférée, le catalyseur supporté au moyen du tissu à fils relevés selon l'invention est un photocatalyseur, par exemple un catalyseur comprenant du titane, du tungstène, du zinc ou leurs mélanges.
Comme catalyseurs préférés, le dioxyde de titane (TiO₂) ou l'oxyde de zinc (ZnO) ou leurs mélanges sont particulièrement avantageux, en particulier le dioxyde de titane.
De manière générale, le tissu catalytique selon l'invention est défini selon l'ensemble des caractéristiques du tissu à fils relevés selon l'invention, tant pour ses caractéristiques générales que pour ses caractéristiques particulières, avantageuses ou préférées, combinées à au moins un catalyseur.
Ainsi, l'invention fournit un tissu catalytique comprenant un catalyseur tel qu'un photocatalyseur, notamment à base de titane, de tungstène, de zinc ou leurs mélanges, en particulier TiO₂ et ZnO, de préférence TiO₂, supporté sur un tissu à fils relevés selon l'invention combinant en tout ou partie les caractéristiques suivantes :
- le tissu comprend une trame, une chaîne de fond et une chaîne de fils relevés ou bien le tissu comprend une trame, deux chaînes de fond et une chaîne de fils relevés ;
- le tissu est un velours coupé ou un velours par chaîne ou un velours par chaîne et coupé ;
- la hauteur de poil du tissu est comprise entre 1 et 10 mm ou entre 2 et 8 mm ;
- la densité de poils du tissu est comprise entre 50 et 200 poils par cm², de préférence comprise entre 80 et 160 poils par cm², en particulier entre 60 et 120 poils par cm² ;
- les fils utilisés sont en verre, en métal, tel que l'acier, en particulier l'acier inoxydable ; préférentiellement les fils utilisés sont en verre et notamment en silice, en silice purifiée ou en quartz, notamment préparés à partir de cristaux de quartz, ou les fils sont en cristal ou verre au plomb ou encore en verre sodique ou encore les fils sont fabriqués à partir de fibres de silice très pure, par exemple de pureté supérieure à 90%, à 95 ou 99%, voire à 99,99% ; ou à partir de mélanges ou de combinaisons de différents fils, en particulier à partir de mélanges de différents fils de verre ou les fils de fond peuvent être de mélanges de fils de verre et de fils métalliques, en particulier de mélanges de fils de quartz et de fils d'acier inoxydable ;
- les fils sont choisis parmi les fils câblés ;
- les fils mis en œuvre ont une taille allant de 10 à 500 tex ou de 15 à 200 tex ou de 20 à 100 tex ou de 25 à 80 tex ou de 40 à 75 tex.

De manière très avantageuse, l'invention fournit un tissu catalytique à fils relevés comprenant
- une trame et au moins une chaîne de fond en fils retors, en silice ou en quartz, de taille allant de 5 à 2000 tex ;
- une chaîne de fils relevés dont la hauteur de poil est comprise entre 0,5 et 15 mm dont les fils sont des fils retors, en verre, de taille allant de 5 à 2000 tex ;
- au moins un photocatalyseur comprenant du TiO₂.

Le tissu catalytique selon l'invention est préparé selon un procédé comprenant le dépôt du catalyseur sur le tissu à fils relevés selon l'invention.
Ce dépôt peut par exemple être réalisé par différentes méthodes connues de l'homme du métier. Il peut notamment être effectué par pulvérisation du catalyseur sur le tissu ou par trempage du tissu dans une solution sol-gel de catalyseur ou encore par magnétron pulsé haute puissance, par techniques MOCVD (metal organic chemical vapor deposition) ou MOVPE (metal organic vapor phase epitaxy), par technique ALD (atomic layer déposition), par technique CVD (chemical vapor phase) ou dépôt chimique en phase vapeur.

L'invention concerne également l'utilisation du tissu catalytique selon l'invention dans différents domaines techniques nécessitant la mise en œuvre d'au moins un catalyseur supporté. En effet, le tissu à fils relevés selon l'invention possède une surface spécifique particulièrement importante et permet d'obtenir un tissu catalytique possédant une efficacité améliorée par rapport aux supports de catalyseurs de l'état de la technique.

Ainsi, le tissu catalytique selon l'invention peut avantageusement être utilisé dans le domaine de la purification de fluides liquides ou gazeux ou encore pour la désodorisation de fluides gazeux.
Le tissu catalytique selon l'invention peut également être utilisé dans le domaine de la catalyse chimique.
Ainsi, l'invention fournit un procédé de purification d'un fluide liquide ou gazeux comprenant l'utilisation d'un tissu catalytique selon l'invention.
Le procédé de purification de l'invention peut notamment être mis en œuvre dans une application domestique du traitement de l'air, dans une application médicale du traitement de l'air, dans des applications du traitement de l'air très poussées. Ce procédé peut ainsi et de façon avantageuse être mis en œuvre pour le traitement d'air de salles d'hôpital, de salles blanches, de chambres froides, de salles d'élevage, de pièces domestiques, de pièces d'habitation, de bureaux, etc, et pour le traitement des rejets industriels.
Le procédé de purification de l'invention peut également être avantageusement utilisé pour la désodorisation de l'air, notamment dans les applications précitées, par exemple pour le traitement des odeurs alimentaires, des rejets industriels, des odeurs de solvants, etc.
Le procédé de purification selon l'invention peut également être mis en œuvre pour la dépollution d'un effluent aqueux.

La présente invention va maintenant être décrite à l'aide d'exemples non limitatifs.

### Exemple 1 : velours de quartz double nappe

À partir de fils de silice (Quartzel C9 33x2 S150 QS13 de Saint-Gobain, France) de 33 tex à deux bouts (tex 67 pour le fil utilisé) et dont la torsion est à 150 tours, on a préparé un tissu de quartz double nappe selon l'invention.
Sur un métier adapté, on met en œuvre les étapes suivantes :
1. bobinage des fils pour l'encantrage,
2. ourdissage des deux chaînes de fond puis ourdissage de la chaîne de poils,
3. pliage des trois chaînes sur leurs ensouples,
4. nouage des deux chaînes de fond et nouage de la chaîne de poils,
5. tissage des chaînes de fond et de la chaîne de poils (la chaîne de poils vient lier la pièce haute, chaîne de fond n°1, et la pièce basse, chaîne de fond n°2, pour former un velours),
6. séparation des deux chaînes de fond (n°1 et n°2) par une lame coupante pour séparer la pièce haute et la pièce basse,
7. enroulage des deux pièces sur un rouleau magasin.
On obtient ainsi un velours de quartz double nappe selon l'invention.

### Exemple 2 : velours de quartz simple nappe

À partir d'un fil identique au fil utilisé pour l'exemple 1, on a préparé un tissu de quartz simple nappe selon l'invention.
Sur un métier adapté, on met en œuvre les étapes suivantes :
1. bobinage des fils pour l'encantrage,
2. ourdissage de la chaîne de fond puis ourdissage de la chaîne de poils,
3. pliage des deux chaînes sur leurs ensouples,
4. nouage de la chaîne de fond et nouage de la chaîne de poils,
5. tissage de la chaine de fond et de la chaîne de poils,
6. découpage du poil (la chaîne de poils vient se poser sur les fers pour former un velours, la hauteur des fers définis la hauteur de poil),
7. enroulage de la pièce sur un rouleau magasin.
On obtient ainsi un velours de quartz simple nappe selon l'invention.

### Exemple 3 : tissu catalytique supportant du TiO₂

On prépare plusieurs échantillons d'un velours de quartz simple nappe selon l'invention préparé à partir de l'exemple 2.
Ces échantillons sont mis en forme par découpage et couture puis nettoyés (désensimage) par trempage humide à environ 80°C dans une solution aqueuse de polyglycol d'alcool gras éthoxlé (8 OE) à 0,5 % (produit Zuzolat 1008/25 Zschimmer et Schwarz).
Puis, le catalyseur TiO₂ est déposé par pulvérisation (par spray) ou par trempage dans un sol-gel de TiO₂ et silice à 400 mL/m².

### Exemple 4 : efficacité catalytique d'un tissu catalytique au TiO₂

L'efficacité du tissu photocatalytique selon l'invention a été évaluée pour la dégradation d'acide formique en comparaison avec différents catalyseurs supportés de l'état de la technique.
Un échantillon de tissu de velours de quartz (surface : 9 cm²) a été préparé selon l'exemple 3.
On prépare 70mL d'une solution aqueuse d'acide formique (50 mg/L).
On immerge le tissu photocatalytique dans la solution sous agitation et durant 30 min.
Puis on irradie la solution contenant le tissu photocatalytique (UVC, 3,2mW/cm²) pendant 180 min. La dégradation de l'acide formique est suivie par HPLC sur colonne à échange de cations avec un éluant acide sulfurique dilué et détection d'absorption par UV.
Dans les mêmes conditions, l'efficacité de différents photocatalyseurs supportés de l'état de la technique a été comparée à l'efficacité du tissu photocatalytique selon l'invention.
Les résultats obtenus sont rassemblés dans le tableau 1.

**Tableau 1**

| Support de dépôt (30 mm x 30 mm) | Méthode de dépôt du catalyseur | Vitesse initiale moyenne mg/L/min | Vitesses initiales endurance mg/L/min |
|---|---|---|---|
| velours de quartz selon l'invention | trempage | 0,22 | 0,21 / 0,23 / 0,21 / 0,21 |
| plaque d'acier inox | trempage | 0,11 | 0,12 / 0,12 / 0,09 / 0,09 |
| plaque de verre plat | trempage | 0,16 | - |
| plaque de verre (Lumiclean Saint-Gobain) | - | 0,09 | - |
| tissu de cellulose (papier Alsthom) | - | 0,14 | - |

On constate que la vitesse initiale de dégradation de l'acide formique obtenue avec le tissu photocatalytique selon l'invention est supérieure à celle de tous les catalyseurs supportés de l'état de la technique
De plus, l'endurance du tissu photocatalytique selon l'invention, mesurée par 4 tests successifs, montre que ce tissu photocatalytique est efficace sans perte d'activité photocatalytique.

## Revendications

1. Tissu catalytique comprenant :
• un tissu à fils relevés comprenant
◆ une trame et au moins une chaîne de fond en fils retors, en verre, en métal, ou leurs combinaisons, de taille allant de 5 à 2000 tex ;
◆ une chaîne de fils relevés dont la hauteur de poil est comprise entre 0,5 et 15 mm dont les fils sont des fils retors, en verre, de taille allant de 5 à 2000 tex ; et
• au moins un photocatalyseur.

2. Tissu catalytique selon la revendication 1 :
• comprenant une trame, une chaîne de fond et une chaîne de fils relevés ou comprenant une trame, deux chaînes de fond et une chaîne de fils relevés ; ou
• qui est un velours coupé ou un velours par chaîne ou un velours par chaîne et coupé.

3. Tissu selon les revendications 1 ou 2 dont les fils de la trame et de la chaîne de fond ou les fils relevés sont des fils câblés.

4. Tissu catalytique selon les revendications 1 à 3 dont les fils de la trame et de la chaîne de fond sont en verre.

5. Tissu catalytique selon les revendications 1 à 4 dont les fils de la trame et de la chaîne de fond ou les fils relevés, de préférence les fils relevés, sont en silice, en silice purifiée ou en quartz.

6. Tissu catalytique selon les revendications 1 à 5 :
• dont les fils de la trame et de la chaîne de fond ou les fils relevés ont une taille allant de 10 à 500 tex ou de 15 à 200 tex ou de 20 à 100 tex ou de 25 à 80 tex ou de 40 à 75 tex ;
• dont la hauteur des poils est comprise entre 1 et 10 mm ou entre 2 et 8 mm ; ou
• dont la densité de poils du tissu est comprise entre 50 et 200 poils par cm² ou entre 80 et 160 poils par cm² ou entre 60 et 120 poils par cm².

7. Tissu catalytique selon les revendications 1 à 6 dont le photocatalyseur comprend du titane, du tungstène ou du zinc ou leurs mélanges.

8. Tissu catalytique selon la revendication 7 dont le photocatalyseur comprend du dioxyde de titane (TiO₂) ou de l'oxyde de zinc (ZnO) ou leurs mélanges.

9. Tissu catalytique selon les revendications 1 à 8 dont le photocatalyseur est supporté sur le tissu à fils relevés.

10. Tissu catalytique selon les revendications 1 à 9 dans lequel les fils utilisés sont notamment préparés à partir de cristaux de quartz, ou les fils sont en cristal ou verre au plomb ou encore en verre sodique ou encore les fils sont fabriqués à partir de fibres de silice très pure, par exemple de pureté supérieure à 90%, à 95 ou 99%, voire à 99,99% ; ou à partir de mélanges de différents fils, en particulier à partir de mélanges de différents fils de verre ou les fils de fond peuvent être de mélanges de fils de verre et de fils métalliques, en particulier de mélanges de fils de quartz et de fils d'acier inoxydable.

11. Procédé de fabrication d'un tissu catalytique à fils relevés comprenant :
la fabrication d'un tissu à fils relevés comprenant :
• au moins un ourdissage pour préparer au moins une chaîne de fond en fils retors, en verre, en métal, ou leurs combinaisons, de préférence en verre, de taille allant de 5 à 2000 tex ;
• un ourdissage pour préparer une chaîne de poils en fils retors, en verre, de taille allant de 5 à 2000 tex ;
• le tissage des chaînes de fond et de poils et de la trame ;
• la coupe des fils de la chaîne de poils à une hauteur de poil comprise entre 0,5 et 15 mm ;
le dépôt d'un photocatalyseur sur le tissu à fils relevés.

12. Procédé selon la revendication 11, dans lequel la fabrication du tissu à fils relevé comprend :
• des ourdissages pour préparer deux chaînes de fond en fils retors, en verre, en métal ou leurs combinaisons, de préférence en verre, de taille allant de 5 à 2000 tex,
• le tissage des chaînes de fond et de poils et de la trame.

13. Procédé selon les revendications 11 ou 12 :
• dont la tension des chaînes de fond est comprise entre 5 et 30 g/fil (entre 0,049 N/fil et 0,29 N/fil), ou
• dont la tension de la chaîne de poils est comprise entre 5 et 30 g/fil (entre 0,049 N/fil et 0,29 N/fil).

14. Procédé selon les revendications 11 à 13 dont la vitesse de tissage est comprise entre 70 coups/min et 300 coups/min.

15. Procédé selon les revendications 11 à 14 dans lequel le dépôt du photocatalyseur est effectué par pulvérisation du photocatalyseur sur le tissu ou par trempage du tissu dans une solution sol-gel de photocatalyseur ou encore par magnétron pulsé haute puissance, par techniques MOCVD (metal organic chemical vapor deposition) ou MOVPE (metal organic vapor phase epitaxy), par technique ALD (atomic layer déposition), par technique CVD (chemical vapor phase) ou dépôt chimique en phase vapeur.

## Patentansprüche

1. Katalytisches Gewebe, umfassend:
• ein Gewebe aus aufrechtstehenden Fäden, umfassend
▪ einen Schuss und mindestens eine Grundkette aus Zwirnen aus Glas, aus Metall oder ihren Kombinationen in einer Abmessung von 5 bis 2000 tex;
▪ eine Kette aus aufrechtstehenden Fäden, deren Florhöhe zwischen 0,5 und 15 mm liegt, deren Fäden Zwirne aus Glas in einer Abmessung von 5 bis 2000 tex sind; und
• mindestens einen Photokatalysator.

2. Katalytisches Gewebe nach Anspruch 1:
• einen Schuss, eine Grundkette und eine Kette aus aufrechtstehenden Fäden umfassend oder einen Schuss, zwei Grundketten und eine Kette aus aufrechtstehenden Fäden umfassend; oder
• das ein geschnittener Samt oder ein Kettsamt oder ein geschnittener Kettsamt ist.

3. Gewebe nach Anspruch 1 oder 2, dessen Schussfäden und Grundkettfäden oder aufrechtstehende Fäden Mehrfachzwirne sind.

4. Katalytisches Gewebe nach den Ansprüchen 1 bis 3, dessen Schussfäden und Grundkettfäden aus Glas bestehen.

5. Katalytisches Gewebe nach den Ansprüchen 1 bis 4, dessen Schussfäden und Grundkettfäden oder aufrechtstehenden Fäden, vorzugsweise die aufrechtstehenden Fäden aus Siliziumoxid, gereinigtem Siliziumoxid oder Quarz bestehen.

6. Katalytisches Gewebe nach den Ansprüchen 1 bis 5:
• dessen Schussfäden und Grundkettfäden oder die aufrechtstehenden Fäden eine Abmessung von 10 bis 500 tex oder von 15 bis 200 tex oder von 20 bis 100 tex oder von 25 bis 80 tex oder von 40 bis 75 tex aufweisen;
• dessen Florhöhe zwischen 1 und 10 mm oder zwischen 2 und 8 mm liegt; oder
• dessen Flordichte des Gewebes zwischen 50 und 200 Florfäden pro cm² oder zwischen 80 und 160 Florfäden pro cm² oder zwischen 60 und 120 Florfäden pro cm² liegt.

7. Katalytisches Gewebe nach den Ansprüchen 1 bis 6, dessen Photokatalysator Titan, Wolfram oder Zink oder ihre Mischungen enthält.

8. Katalytisches Gewebe nach Anspruch 7, dessen Photokatalysator Titandioxid (TiO₂) oder Zinkoxid (ZnO) oder ihre Mischungen enthält.

9. Katalytisches Gewebe nach den Ansprüchen 1 bis 8, **dadurch gekennzeichnet, dass** der Photokatalysator auf dem Gewebe mit aufrechtstehenden Fäden gelagert ist.

10. Katalytisches Gewebe nach den Ansprüchen 1 bis 9, bei dem die verwendeten Fäden insbesondere aus Quarzkristallen hergestellt sind oder die Fäden aus Kristallglas oder Bleiglas oder auch Natriumglas bestehen oder die Fäden auch aus Fasern aus sehr reinem Siliziumoxid, beispielsweise mit einer Reinheit größer als 90 %, als 95 oder 99 %, sogar als 99,99 %; oder aus Mischungen von unterschiedlichen Fäden, insbesondere aus Mischungen von unterschiedlichen Glasfäden hergestellt sind oder die Grundfäden Mischungen aus Glasfäden und Metallfäden sein können, insbesondere Mischungen aus Quarzfäden und Fäden aus rostfreiem Stahl.

11. Verfahren zur Herstellung eines katalytischen Gewebes mit aufrechtstehenden Fäden umfassend:
Herstellen eines Gewebes mit aufrechtstehenden Fäden, umfassend:
• mindestens ein Kettscheren zum Herstellen mindestens einer Grundkette aus aufrechtstehenden Fäden aus Glas, Metall oder ihren Kombinationen, vorzugsweise aus Glas, mit einer Abmessung von 5 bis 2000 tex;
• Kettscheren zum Herstellen eines Kettflors aus aufrechtstehenden Fäden aus Glas mit einer Abmessung von 5 bis 2000 tex;
• Weben der Grundketten und Florketten und des Schusses;
• Schneiden der Fäden der Florkette auf eine Florhöhe zwischen 0,5 und 15 mm;
Aufbringen eines Photokatalysators auf das Gewebe aus aufrechtstehenden Fäden.

12. Verfahren nach Anspruch 11, bei dem die Herstellung des Gewebes aus aufrechtstehenden Fäden umfasst:
• mehrmaliges Kettscheren zum Herstellen von zwei Grundkettfäden aus aufrechtstehenden Fäden aus Glas, Metall oder ihren Kombinationen, vorzugsweise aus Glas, mit einer Abmessung von 5 bis 2000 tex,
• Weben von Grundketten und Florketten und des Schusses.

13. Verfahren nach Anspruch 11 oder 12:
• bei dem die Spannung der Grundketten zwischen 5 und 30 g/Faden (zwischen 0,049 N/Faden und 0,29 N/Faden liegt oder
• bei dem die Spannung der Florkette zwischen 5 und 30 g/Faden (zwischen 0,049 N/Faden und 0,29 N/Faden) liegt.

14. Verfahren nach den Ansprüchen 11 bis 13, bei dem die Webgeschwindigkeit zwischen 70 Schläge/min und 300 Schläge/min beträgt.

15. Verfahren nach den Ansprüchen 11 bis 14, bei dem das Aufbringen des Photokatalysators durch Zerstäuben des Photokatalysators auf das Gewebe oder durch Tauchen des Gewebes in eine Sol-Gel-Lösung des Photokatalysators oder auch durch ein gepulstes Magnetron hoher Leistung, durch MOCVD (metal organic chemical vapor deposition) oder MOVPE (metal organic vapor phase epitaxy) Techniken, durch eine ALD (atomic layer deposition) Technik, durch eine CVD (chemical vapor phase) Technik oder chemische Dampfabscheidung durchgeführt wird.

## Claims

1. A catalytic fabric, comprising:
• a pile fabric comprising:
∘ a weft and at least one ground warp of twisted yarns in glass, metal or combinations thereof, of size ranging from 5 to 2000 tex;
∘ a pile warp of pile height between 0.5 and 15 mm, the yarns of which are twisted yarns in glass, of size ranging from 5 to 2000 tex; and
• at least one photocatalyst.

2. The catalytic fabric according to claim 1:
• comprising a weft, a ground warp and a pile warp, or comprising a weft, two ground warps and a pile warp; or
• which is a cut-pile or warp velvet or cut-pile warp velvet.

3. The fabric according to claims 1 or 2 wherein the weft and ground warp yarns or the pile yarns are cable yarns.

4. The catalytic fabric according to claims 1 to 3 wherein the yarns of the weft and of the warp are in glass.

5. The catalytic fabric according to claims 1 to 4 wherein the weft and ground warp yarns or pile yarns, preferably the pile yarns, are in silica, in purified silica or in quartz.

6. The catalytic fabric according to claims 1 to 5:
• wherein the weft and ground warp yarns or pile yarns have a size ranging from 10 to 500 tex or 15 to 200 tex or 20 to 100 tex or 25 to 80 tex or 40 to 75 tex;
• wherein the pile height is between 1 and 10 mm or between 2 and 8 mm; or
• wherein the pile density of the fabric is between 50 and 200 pile yarns per cm2 or between 80 and 160 pile yarns per cm2 or between 60 and 120 pile yarns per cm2.

7. The catalytic fabric according to claims 1 to 6 wherein the photocatalyst comprises titanium, tungsten or zinc or mixtures thereof.

8. The catalytic fabric according to claim 7 wherein the photocatalyst comprises titanium dioxide (TiO₂) or zinc oxide (ZnO) or mixtures thereof.

9. The catalytic fabric according to claims 1 to 8 wherein the photocatalyst is carried on the pile fabric.

10. The catalytic fabric according to claims 1 to 9 wherein the yarns used are prepared in particular from quartz crystals, or the yarns are in lead crystal or lead glass, or in soda-lime glass or the yarns are manufactured from highly pure silica fibres, for example of purity higher than 90 %, 95 or 99 %, even higher than 99.99 %; or from mixtures of different yarns, in particular from mixtures of different glass yarns or the ground yarns may be mixtures of glass yarns and metal yarns, in particular mixtures of quartz yarns and stainless steel yarns.;

11. A method for manufacturing a catalytic pile fabric comprising:
the manufacturing of a pile fabric comprising:
• at least one warping to prepare at least one ground warp of twisted yarns in glass, in metal or combinations thereof, preferably in glass, of size ranging from 5 to 2000 tex;
• warping to prepare a pile warp in glass, of size ranging from 5 to 2000 tex;
• weaving the ground and pile warps and the weft;
• cutting the pile warp yarns with a pile height comprised between 0,5 and 15 mm;
depositing of a photocatalyst on the pile fabric.

12. The method according to claim 11, wherein manufacturing of the pile fabric comprises:
• warpings to prepare two ground warp of twisted yarns, in glass, in metal or combinations thereof, preferably in glass, of size ranging from 5 to 2000 tex,
• weaving the ground warp and pile warps and the weft.

13. The method according to claims 11 or 12:
• wherein the tension of the ground warps is between 5 and 30 g/yarn (between 0,049 N/yarn and 0,29 N/yarn), or
• wherein the tension of the pile warp is between 5 and 30 g/yarn (between 0,049 N/yarn and 0,29 N/yarn).

14. The method according to claims 11 to 13 wherein the weaving speed is between 70 rounds/min and 300 rounds/min.

15. Method according to claims 11 to 14 wherein deposition of the photocatalyst is achieved by spraying of the photocatalyst on the fabric or by dipping of the fabric in a catalyst sol-gel solution or by high-powered pulsed magnetron, via MOCVD technique (metal organic chemical vapor deposition) or MOVPE (metal organic vapor phase epitaxy), by ALD technique (atomic layer deposition), by CVD technique (chemical vapor phase) or vapour phase chemical deposition.
